# EUROPÄISCHE PATENTSCHRIFT

(11) **EP 1 138 212 B1**
(45) Veröffentlichungstag und Bekanntmachung des Hinweises auf die Patenterteilung: **22.11.2006**
(21) Anmeldenummer: 01100431.4
(22) Anmeldetag: 08.01.2001
(51) Int. Cl.: A23N 12/08

(54) **Röstvorrichtung**
Roasting apparatus
Appareil de torréfaction

(30) Priorität: 24.03.2000 DE 20005577 U
(43) Veröffentlichungstag der Anmeldung: 04.10.2001
(73) Patentinhaber: Alfred C. G. Nolte KG, 21465 Reinbek (DE)
(72) Erfinder: Küger, Andreas, Dipl.-Phys., 21465 Reinbek (DE)
(74) Vertreter: Jaeschke, Rainer

(56) Entgegenhaltungen:
- EP-A- 1 034 707
- DE-A- 1 909 355
- DE-A- 3 419 250
- US-A- 5 269 072
- US-A- 5 292 005
- US-A- 5 564 331

## Beschreibung

Die Erfindung betrifft eine Vorrichtung zum thermischen Behandeln von körnigem Gut, bei welcher das zu behandelnde Gut auf einem Lochboden liegt, der von unten mit einem Gas durchströmt wird, und bei welcher das Abgas hinter der Wirbelschicht einem Drallabscheider zum Abscheiden von ausgetragenen Feststoffpartikeln zuführbar ist. Insbesondere betrifft die Erfindung eine Vorrichtung zum Rösten von Lebensmitteln wie Kaffeebohnen, Nüssen oder Mandeln, so daß im folgenden überwiegend von einem Kaffeeröster die Rede ist, ohne daß damit eine Beschränkung verbunden sein soll.

Bei der Verarbeitung von Kaffee ist es erforderlich diesen zu rösten. Dazu sind Röstvorrichtungen vorgesehen, mit denen der Rohkaffee thermisch behandelt werden kann, bis er den gewünschten Röstgrad erhält. Grundsätzlich kann man bei solchen Röstvorrichtungen diskontinuierliche und kontinuierliche arbeitende Öfen unterscheiden. Für große Mengen ist es häufig zweckmäßig, kontinuierlich arbeitende Rösteinrichtungen vorzusehen. Solche Röstvorrichtungen sind beispielsweise aus der EP 0 756 145 A2, EP 0 965 279 A2 oder US-PS 4,419,384 und EP 0 137 556 A1 bekannt.

Bei dem diskontinuierlichen Röstverfahren wird eine vorbestimmte Menge des Gutes über die gewünschte Zeitdauer mit der erforderlichen Temperatur beaufschlagt. Es werden häufig Kontaktröster eingesetzt. Hier sind teilweise relativ hohe Temperaturen erforderlich, um zu gewährleisten, daß die eingefüllte Charge vollständig durchgeröstet wird. Auch ist es bekannt, das Gut von unten mit Heizgasen zu beaufschlagen, um eine Wirbelschicht zu erzeugen. Hierbei kann auch bei geringeren Temperaturen geröstet werden. Bei solchen Röstöfen ist es erforderlich, hinter dem Wirbelbett die ausgetragenen Feststoffpartikel, die sogenannten Häutchen, in einem Abscheider aus dem Gasstrom zu entfernen. Es ist beispielsweise aus der US-PS 5,292,005 eine Röstvorrichtung bekannt, bei welcher ein Drallabscheider über dem Wirbelbett angeordnet ist. Ein solcher Röster baut jedoch sehr hoch.

Der Erfindung liegt die Aufgabe zugrunde, eine diskontinuierlich arbeitende Vorrichtung der eingangs geschilderten Art zum thermischen Behandeln von Gut möglich kompakt auszubilden. Ferner sollen sowohl die thermischen Verluste als auch die Druckverluste möglichst gering gehalten werden.

Die Aufgabe wird gemäß einer ersten Ausführungsform der Erfindung dadurch gelöst, daß der Siebboden in einer inneren Kammer angeordnet ist, die von einer den Drallabscheider bildenden äußeren Kammer zumindest teilweise umgeben ist, in die das Abgas aus der inneren Kammer von oben mit einer Drallströmung einführbar ist.

Gemäß einer zweiten Ausführungsform der Erfindung ist der Siebboden in einer äußeren Kammer angeordnet, bei welcher zumindest der Bereich über dem Lochboden als Drallabscheider ausgebildet ist und die eine innere Kammer zumindest teilweise umschließt, durch die das Gas unterhalb des Lochbodens mit einer Drallströmung in die äußere Kammer einführbar ist.

Beiden Ausführungen ist gemeinsam, daß der Drallabscheider und die Röstkammer in einem gemeinsamen Gehäuse angeordnet sind. Das Gehäuse baut mehr in die Breite als in die Höhe, so daß die Vorrichtung bequem in Räumen mit üblichen Abmaßen aufgestellt werden kann. Weiterhin ergibt sich durch diesen Aufbau zum einen eine minimale Oberfläche, so daß die thermischen Verluste gering gehalten werden können. Zum anderen sind die Strömungswege kurz, so daß der Druckverlust minimiert wird. Insbesondere werden keine Rohrleitungen und dergleichen für das Gas benötigt, die teilweise maßgebend für die thermischen Verluste und die Druckverluste sind.

Grundsätzlich kann die Wirbelschicht durch Frischgas erzeugt werden. Gemäß einer bevorzugten Ausführungsform der Erfindung ist vorgesehen, daß der untere beziehungsweise der obere Bereich der inneren Kammer in Strömungsverbindung mit der äußeren Kammer steht, um zumindest einen Teil des Gases im Kreislauf zu führen. Dies hat den Vorteil, daß ein stetiges Aufwärmen von Frischgas vermieden und die Energieausnutzung weiter optimiert wird.

Es ist günstig, wenn die äußere Kammer und/oder die innere Kammer im Querschnitt im wesentlichen kreisrund sind. Dabei ist es zweckmäßig, die äußere Kammer und die innere Kammer konzentrisch zueinander anzuordnen. Insbesondere für die den Drallabscheider bildende äußere Kammer werden somit optimale Strömungsbedingungen für das Abgas erreicht, das in der im wesentlichen ringförmigen äußeren Kammer um die innere Kammer vom Auslaß zum Einlaß der inneren Kammer strömt.

Es ist zweckmäßig, wenn im oberen beziehungsweise unteren Bereich der inneren Kammer ein Ventilator zum Erzeugen der Drallströmung angeordnet ist, dessen Saugseite mit der inneren Kammer und dessen Druckseite mit der äußeren Kammer verbunden ist. Dabei kann vorgesehen werden, daß der Ventilator als Radiallüfter ausgebildet ist, dessen Lüfterrad koaxial zur inneren und/oder äußeren Kammer angeordnet ist. Ein solcher Lüfter ist leicht zu montieren und erzeugt die gewünschte Drallströmung in der äußeren Kammer. Ferner kann bei einer Montage im oberen Bereich beziehungsweise im unteren Bereich der Motor außerhalb des Rösters bleiben, was in Bezug auf die Wärmeentwicklung und die Zugänglichkeit für eine Wartung günstig ist.

Weiterhin können in der Gasströmung zwischen der Wandung der inneren und äußeren Kammer Leitbleche vorhanden sein, die die Bildung der Drallströmung unterstützen. Damit kann ein verstärkter Drall des Abgases auf seinem Weg durch die äußere Kammer zum Einlaß der inneren Kammer erzeugt werden, um die Feststoffpartikel besser abzutrennen.

Üblicherweise wird wenigstens eine Heizeinrichtung in der Gasströmung außerhalb der Wirbelschicht vorgesehen sein, um das Gas auf die gewünschte Temperatur zu bringen. Die Heizeinrichtung kann bei der zweiten Ausführungsform der Erfindung mit dem Lochboden in der äußeren Kammer insbesondere für größere Röster wenigstens einen Brenner mit einem Flammrohr umfassen, das von oben in die innere Kammer geführt ist. Das Flammrohr kann sich weit in die innere Kammer hinein erstrecken und wenigstens eine Öffnung aufweisen, durch die zumindest ein Teilstrom des zurückströmenden Gases in das Flammrohr zur Nachverbrennung gelangt. Es gelingt hiermit, das Gas ohne Beeinflussung des Röstgutes direkt zu erhitzen. Die Röstvorrichtung bleibt dennoch kompakt, da der Brenner kaum zusätzlichen Einbauraum erfordert.

Es kann auch vorgesehen werden, daß die Heizeinrichtung wenigstens einen Brenner umfaßt, der tangential in die äußere Kammer mündet. Hierdurch kann die Drallströmung in der äußeren Kammer ebenfalls unterstützt werden. Diese Anordnung ist insbesondere bei größeren Röstern in der Ausführungsform zweckmäßig, in der der Lochboden in der inneren Kammer liegt.

Insbesondere für kleinere Röster wird es zweckmäßig sein, wenn die Heizeinrichtung elektrische Heizelemente umfaßt. Die Heizelemente können als Heizstäbe ausgebildet sein, die in der äußeren Kammer verlaufen, oder beispielsweise als Heizwendel, die in der inneren Kammer montiert sind.

Gemäß den physikalischen Bedingungen werden im Drallabscheider Feststoffe radial nach außen getragen. Es ist zweckmäßig, wenn die äußere Kammer wenigstens eine radial außenliegende Öffnung zur Entnahme der abgeschiedenen Feststoffpartikel aufweist. Diese Öffnung kann kurz vor Beendigung des Röstvorgangs geöffnet werden oder aber auch während des Röstens periodisch oder stets geöffnet sein. Eine Ansammlung der Feststoffe wird somit vermieden.

Insbesondere bei der Ausführungsform, bei welcher der Lochboden in der inneren Kammer liegt, ist dieser zum Befüllen und/oder Entleeren relativ schwer erreichbar. Es ist daher vorgesehen, daß der Lochboden zur Entnahme des Gutes zumindest teilweise klappbar ist. Das geröstete Gut kann somit aus der inneren Kammer entfernt werden, wobei die äußere Kammer eine korrespondierende Entnahmeöffnung unterhalb der inneren Kammer aufweist. Bei der ersten Ausführungsform mit innenliegendem Lochboden ist dieser Bereich der äußeren Kammer auch frei zugänglich.

Grundsätzlich ist ein klappbarer Lochboden auch bei der Ausführungsform möglich, bei welcher der Lochboden in der äußeren Kammer liegt. Hier kann aber auch eine außenliegende Öffnung an der Seitenwandung der äußeren Kammer in der Höhe des Siebbodens ausreichend sein. Zum Austragen wird diese nur geöffnet, und das geröstet Gut bewegt sich aufgrund der Drallströmung selbsttätig aus der Öffnung hinaus.

Weiterhin kann es günstig sein, wenn die Außenwandung der äußeren Kammer oder die Wandungen beider Kammern zumindest teilweise durchsichtig sind. Dies hat den Vorteil, daß der Röstvorgang beobachtet werden kann. Insbesondere für kleine Röster ist eine Ausbildung der Wandungen aus Glas möglich. Es wird ein ansprechendes Äußeres bewirkt, so daß der Röster auch zu Schauzwecken in Coffeeshops und dergleichen eingesetzt werden kann.

Der erfindungsgemäße Röster eignet sich sowohl für kleine als auch für große Chargen. Bei größeren Chargen wird der Einsatz von Gasbrennern zum Einbringen der erforderlichen Wärmeenergie zweckmäßig sein. Bei kleineren Brennern kann der Einsatz von elektrischer Heizenergie günstiger sein. Der Strömungsverlauf des Gases ist stets gleich und auf ein Mindestmaß reduziert. Bei der einen Ausführungsform strömt das Gas von unten durch den Lochboden in der inneren Kammer. Im darüberliegenden Ventilator wird eine Drallströmung in der äußeren Kammer von oben nach unten erzeugt. Dort tritt das Gas wieder in die innere Kammer ein. Bei der anderen Ausführungsform wird eine Drallströmung durch einen sich an den unteren Bereich der inneren Kammer anschließenden Ventilator in der äußeren Kammer von unten nach oben erzeugt. Die Drallströmung erzeugt ein Wirbelbett über dem in der inneren Kammer liegenden Lochboden und gelangt von oben wieder in die innere Kammer hinein. Es liegt hinter dem Wirbelbett somit stets eine Drallströmung vor, die ein Austragen der unerwünschten Feststoffpartikel bewirkt.

Die Erfindung wird im folgenden durch die schematische Zeichnung näher erläutert. Es zeigen:
- Fig. 1: die Draufsicht auf einen offenen Röster gemäß einer ersten Ausführungsform der Erfindung,
- Fig. 2: eine Seitenansicht des Rösters gemäß Fig. 1 im Schnitt,
- Fig. 3: den Röster gemäß Fig. 2 beim Entleeren,
- Fig. 4: den Röster gemäß Fig. 2 beim Entleeren in einer anderen Ausführungsform,
- Fig. 5: den Röster gemäß Fig. 2 mit Brenner,
- Fig. 6: die Draufsicht auf einen offenen Röster gemäß einer zweiten Ausführungsform der Erfindung,
- Fig. 7: eine Seitenansicht des Rösters gemäß Fig. 6 im Schnitt,
- Fig. 8: den Röster gemäß Fig. 7 beim Entleeren,
- Fig. 9: den Röster gemäß Fig. 7 mit Brenner und
- Fig. 10: den Röster gemäß Fig. 7 mit Brenner und Nachverbrennung.

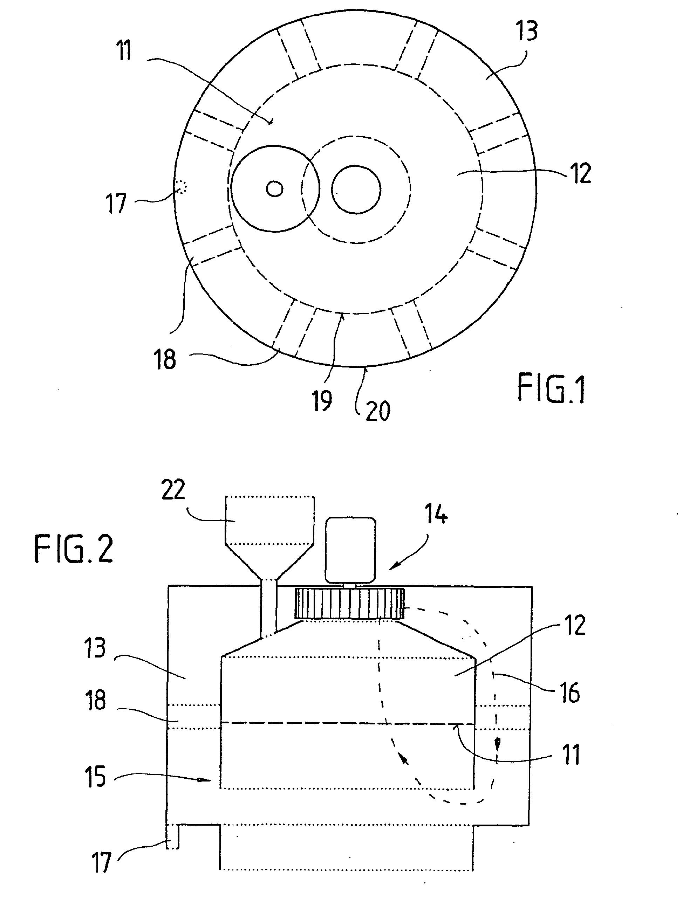

Der in den Fig. 1 bis 5 gezeigte Röster zum thermischen Behandeln von körnigem Gut, insbesondere zum Rösten von Kaffee, umfaßt einen Lochboden 11, auf dem das Röstgut aufliegt. Der Lochboden 11 ist in einer inneren Kammer 12 angeordnet, die im wesentlichen hohlzylindrisch ausgebildet ist. Diese innere Kammer 12 wird von einer äußeren Kammer 13 umgeben. Die äußere Kammer 13 ist ebenfalls hohlzylindrisch ausgebildet und verläuft konzentrisch zur inneren Kammer 12.

Der Siebboden 11 verläuft bei dem gezeigten Ausführungsbeispiel in etwa mittig durch die innere Kammer 12. Grundsätzlich kann der Lochboden auch weiter unten angeordnet sein. An den oberen Bereich der inneren Kammer 12 schließt sich ein Radiallüfter 14 an, dessen Saugseite dem Lochboden zugekehrt ist. Die Druckseite mündet in die äußere Kammer 13. Der untere Bereich 15 der inneren Kammer steht in Strömungsverbindung mit der äußeren Kammer 13. Im einzelnen ist die Anordnung so getroffen, daß die innere Kammer unten offen ausgebildet ist und innerhalb der äußeren Kammer endet.

Während des Betriebs wird durch den Radiallüfter eine Drallströmung 16 des Gases in der äußeren Kammer 13 von oben nach unten bewirkt. Das Gas tritt in die innere Kammer 12 von unten ein und durchströmt den Lochboden unter Bildung einer Wirbelschicht des nicht gezeigten Röstguts. Das Gas kann somit im Kreislauf gefahren werden.

Durch die Drallströmung 16 in der äußeren Kammer werden aus der Wirbelschicht mitgerissene Feststoffpartikel, beispielsweise die Häutchen des Rohkaffees, radial nach außen getragen und so aus dem Gasstrom entfernt. Es ist eine radial äußere Öffnung 17 vorgesehen, mit der diese Feststoffpartikel aus dem Röster entfernt werden können. Grundsätzlich wird der Radiallüfter eine ausreichende Drallströmung erzeugen. Für eine stärkere Drallwirkung können Leitbleche 18 vorhanden sein, die zwischen den Wandungen 19, 20 der inneren und äußeren Kammer verlaufen. Die Leitbleche sind in der Zeichnung gestrichelt dargestellt.

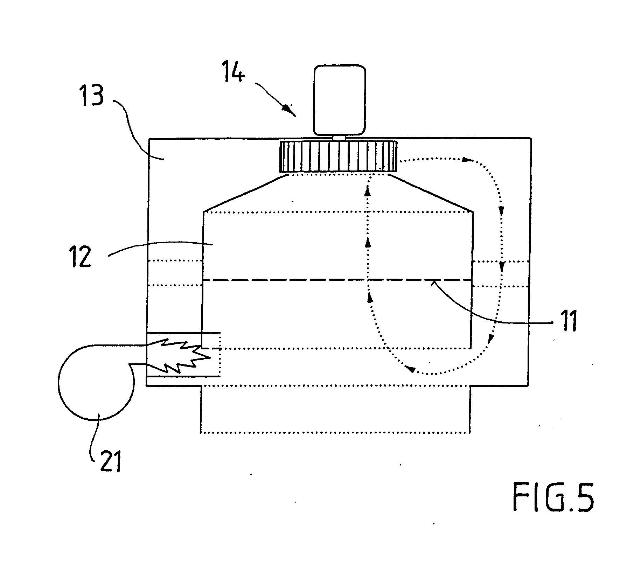

Zum Beheizen des Gases können nicht gezeigte elektrische Heizelemente in der äußeren Kammer 13 vorgesehen werden. Bei dem Ausführungsbeispiel in Fig. 5 ist zum Beheizen des Gasstroms ein Brenner 21 vorgesehen, der radial in die äußere Kammer 13 mündet. Hierdurch wird zudem die Drallströmung unterstützt.

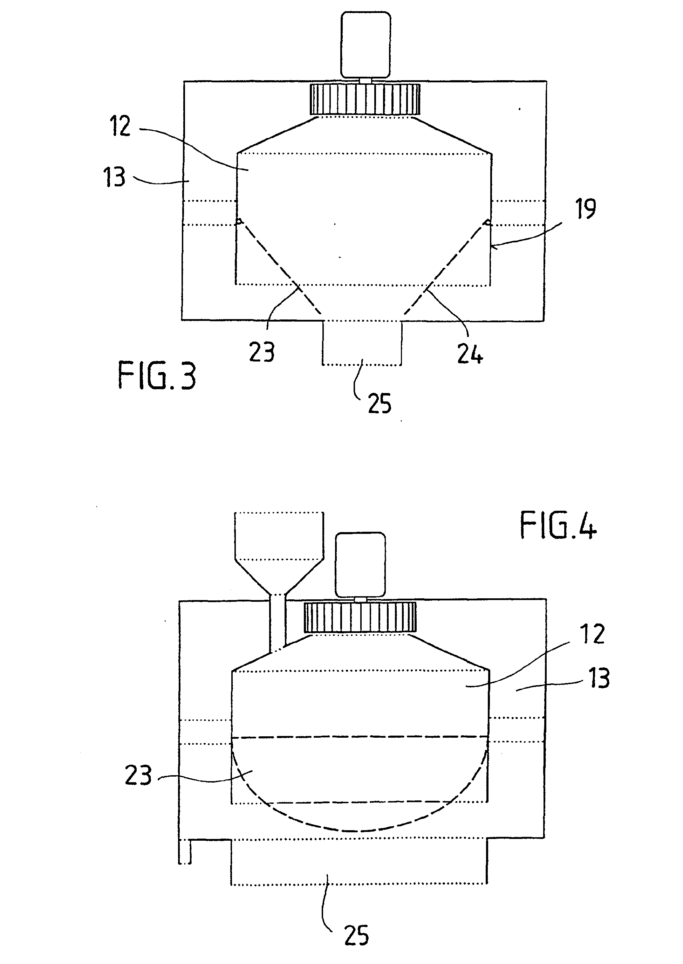

Das Röstgut wird von oben durch einen Einfülltrichter 22 auf den Lochboden 11 in der inneren Kammer 12 eingeführt. Nach dem Rösten muß das Röstgut wieder aus der Kammer 12 entfernt werden. Grundsätzlich ist es möglich, den gesamten Röster zu verschwenken. Bei dem Ausführungsbeispiel gemäß Fig. 3 ist der Lochboden klappbar ausgebildet. Im einzelnen ist die Anordnung so getroffen, daß der Lochboden zwei Hälften 23, 24 aufweist, die am Umfang an der Wandung 19 der inneren Kammer angelenkt sind. Bei dem Ausführungsbeispiel gemäß Fig. 4 ist der Lochboden ebenfalls geteilt, jedoch sind die Hälften entlang des Durchmessers angelenkt. Die äußere Kammer 13 weist in beiden Fällen im unteren Bereich eine entsprechende, verschließbare Öffnung 25 auf, durch die das geröstete Gut nach außen gelangt. Es kann vorgesehen werden, daß der Lochboden vollständig klappbar ist. Es kann aber auch ausreichend sein, nur einen Teil, beispielsweise nur eine Hälfte 23 oder 24, des Röstbodens klappbar auszubilden, da sich das Röstgut durch den auch über dem Rostboden vorhandenen Drall horizontal bewegt und so ausgetragen werden kann.

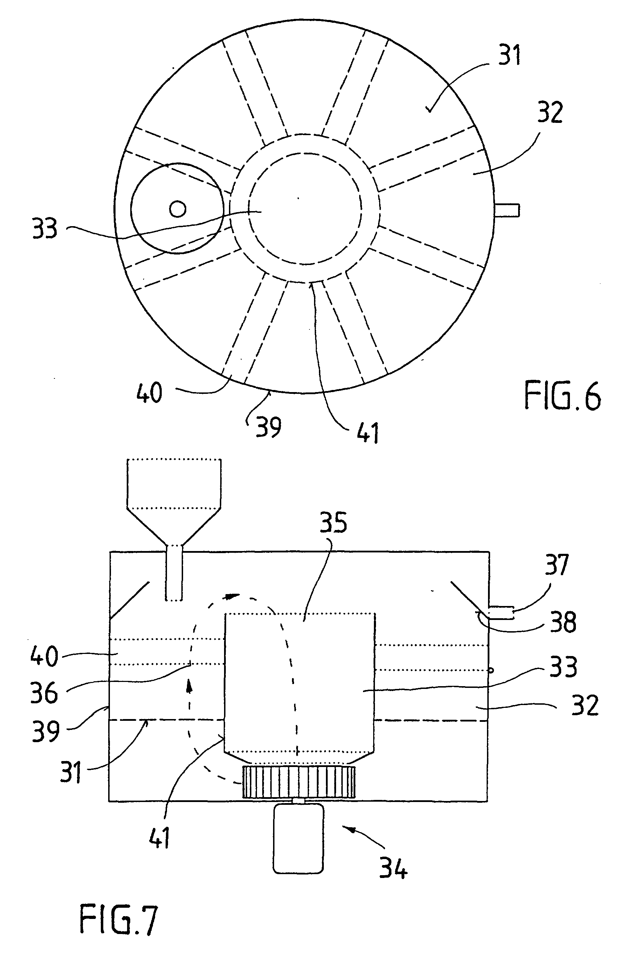

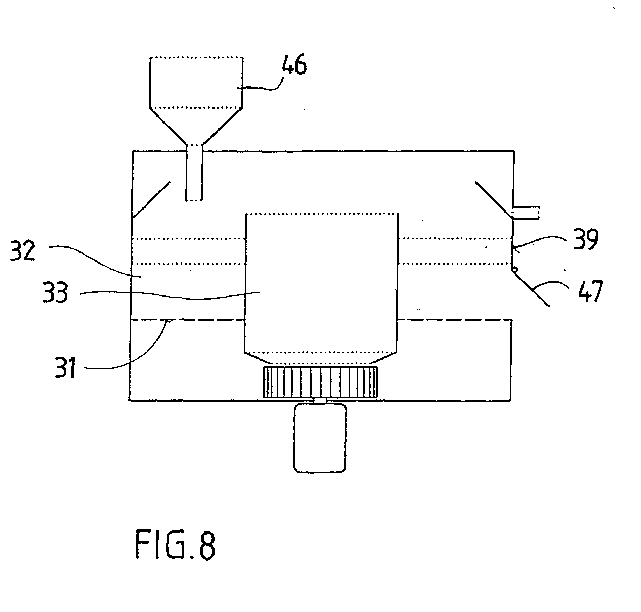

Der in den Fig. 6 bis 10 gezeigte Röster zum Rösten von Kaffee, besitzt einen Lochboden 31, auf dem das Röstgut aufliegt. Der Lochboden 31 ist in einer äußeren Kammer 32 angeordnet, die im wesentlichen hohlzylindrisch ausgebildet ist. Die äußere Kammer 32 umgibt eine innere Kammer 33. Die innere Kammer 33 ist ebenfalls hohlzylindrisch ausgebildet und verläuft konzentrisch zur äußeren Kammer 32.

Der somit im wesentlichen ringförmige Siebboden 31 verläuft bei dem gezeigten Ausführungsbeispiel im unteren Bereich der äußeren Kammer 32. Grundsätzlich kann der Lochboden auch weiter oben angeordnet sein. An den unteren Bereich der inneren Kammer 33 schließt sich ein Radiallüfter 34 an, dessen Saugseite nach oben in die innere Kammer weist. Die Druckseite mündet in die äußere Kammer 32. Der obere Bereich 35 der inneren Kammer 33 steht in Strömungsverbindung mit der äußeren Kammer 32. Im einzelnen ist die Anordnung so getroffen, daß die innere Kammer 33 oben offen ausgebildet ist und innerhalb der äußeren Kammer 32 endet.

Während des Betriebs wird durch den Radiallüfter eine Drallströmung 36 des Gases in der äußeren Kammer 32 von unten nach oben bewirkt. Das Gas durchströmt den Lochboden 31 unter Bildung einer Wirbelschicht des nicht gezeigten Röstguts. Es hat sich gezeigt, daß der Drall hierbei weitestgehend aufrechterhalten bleibt. Durch die Drallströmung in der äußeren Kammer 32 über dem Lochboden werden aus der Wirbelschicht die mitgerissenen Feststoffpartikel radial nach außen getragen und so aus dem Gasstrom entfernt. Es ist im oberen Bereich der äußeren Kammer eine radial äußere Öffnung 37 vorgesehen, mit der diese Feststoffpartikel aus dem Röster entfernt werden können. Es können umlaufende Absperrbleche 38 vorhanden sein, die ein Herabgleiten der abgetrennten Feststoffpartikel an der Wandung 39 verhindern. Grundsätzlich wird der Radiallüfter 34 eine ausreichende Drallströmung erzeugen. Für eine stärkere Drallwirkung können oberhalb des Lochbodens 31 Leitbleche 40 vorhanden sein, die zwischen den Wandungen 39, 41 der äußeren und inneren Kammern verlaufen. Die Leitbleche sind in der Zeichnung gestrichelt dargestellt.

Das von Feststoffen befreite Gas gelangt von oben in die innere Kammer 33, wo es durch den Lüfter 34 angesaugt und wieder in die äußere Kammer 32 eingeblasen wird. Das Gas kann somit im Kreislauf geführt werden.

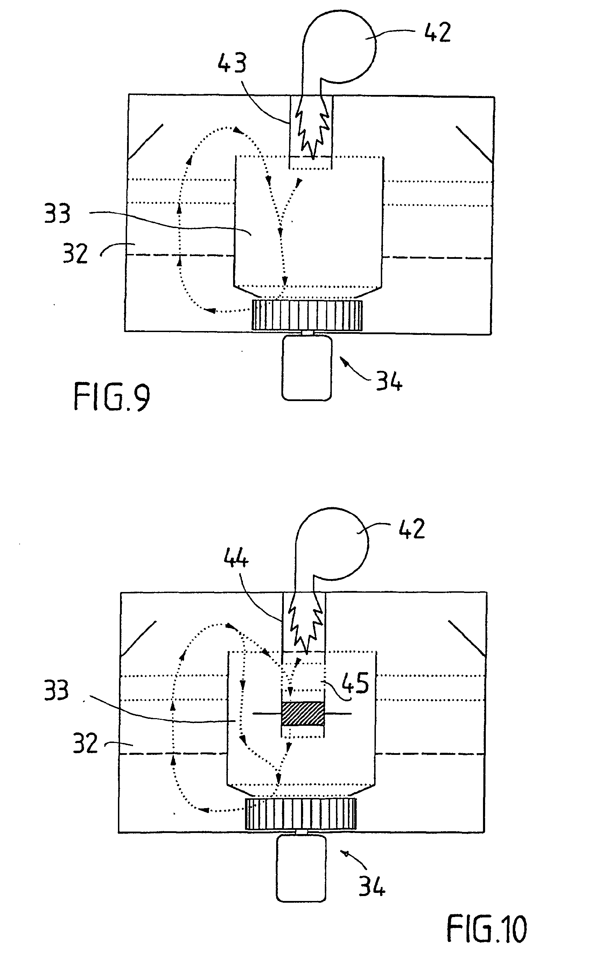

Zum Beheizen des Gases können nicht gezeigte elektrische Heizelemente vorzugsweise in der inneren Kammer 33 vorgesehen werden. Bei dem Ausführungsbeispiel in Fig. 9 ist zum Beheizen des Gasstroms ein Brenner 42 vorgesehen, der über ein Flammrohr 43 in die innere Kammer 33 mündet. Bei dem Ausführungsbeispiel gemäß Fig. 10 ragt das Flammrohr 44 weit in die innere Kammer hinein und ist mit seitlichen Öffnungen 45 versehen. Damit kann ein Teilstrom des zurückgeführten Gases nachverbrannt werden. Die Nachverbrennung erfolgt vorzugsweise katalytisch, so daß die Temperatur des wieder zusammengeführten Heizgases in dem gewünschten Rösttemperaturbereich gehalten werden kann.

Das Röstgut wird von oben durch einen Einfülltrichter 46 auf den Lochboden 31 in der äußeren Kammer 32 eingeführt. Nach dem Rösten muß das Röstgut wieder aus der Kammer 32 entfernt werden. Grundsätzlich ist es auch hier möglich, den gesamten Röster zu verschwenken. Hier kann aber auch eine außenliegende Öffnung 47 an der Seitenwandung 39 der äußeren Kammer in der Höhe des Siebbodens ausreichend sein. Zum Austragen wird diese nur geöffnet, und das geröstet Gut bewegt sich aufgrund der Drallströmung selbsttätig aus der Öffnung hinaus.

Bei beiden Ausführungsformen hat sich gezeigt, daß die Drallströmung eine Rotation des Röstgutes auf dem Lochboden 31 und auch auf dem Lochboden 11 in der inneren Kammer bewirkt. Für manche Röstvorgänge ist es günstig, das Röstgut zu befeuchten. Da das Röstgut rotiert, ist es lediglich erforderlich, eine Wasseraufgabeeinrichtung, beispielsweise eine Sprühdüse, nur an einer Stelle am Umfang anzuordnen. Das Röstgut wandert durch diese Stelle hindurch, wobei aufgrund des Wirbelbetts eine gleichmäßige Befeuchtung des Guts bewirkt werden kann.

Wie aus den Zeichnungen ersichtlich, bauen beide Ausführungsformen des Rösters äußerst kompakt. Die freie Oberfläche wird auf ein Minimum reduziert, wodurch die thermischen Verluste gering gehalten werden. Ferner sind die Strömungswege sehr kurz und insbesondere beim Übergang von der inneren zur äußeren Kammer durch den Einsatz eines Radiallüfters optimiert. Die Druckverluste können ebenfalls wesentlich reduziert werden.

## Patentansprüche

1. Vorrichtung zum thermischen Behandeln von körnigem Gut, insbesondere zum Rösten von Lebensmitteln wie Kaffeebohnen, bei welcher das zu behandelnde Gut auf einem Lochboden (11) liegt, der von unten mit einem Gas durchströmt wird, und bei welcher das Abgas hinter der Wirbelschicht einem Drallabscheider zum Abscheiden von ausgetragenen Feststoffpartikeln zuführbar ist, **dadurch gekennzeichnet, daß** der Siebboden (11) in einer inneren Kammer (12) angeordnet ist, die von einer den Drallabscheider bildenden äußeren Kammer (13) zumindest teilweise umgeben ist, in die das Abgas aus der inneren Kammer von oben mit einer Drallströmung (16) einführbar ist.

2. Vorrichtung zum thermischen Behandeln von körnigem Gut, insbesondere zum Rösten von Lebensmitteln wie Kaffeebohnen, bei welcher das zu behandelnde Gut auf einem Lochboden (31) liegt, der von unten mit einem Gas durchströmt wird, und bei welcher das Abgas hinter der Wirbelschicht einem Drallabscheider zum Abscheiden von ausgetragenen Feststoffpartikeln zuführbar ist, **dadurch gekennzeichnet, daß** der Siebboden (31) in einer äußeren Kammer (32) angeordnet ist, bei welcher zumindest der Bereich über dem Lochboden als Drallabscheider ausgebildet ist und die eine innere Kammer (33) zumindest teilweise umschließt, durch die das Gas unterhalb des Lochbodens mit einer Drallströmung in (36) die äußere Kammer einführbar ist.

3. Vorrichtung nach einem der Ansprüche 1 oder 2, **dadurch gekennzeichnet, daß** der untere beziehungsweise der obere Bereich (15, 35) der inneren Kammer (12, 33) in Strömungsverbindung mit der äußeren Kammer (13, 32) steht, um zumindest ein Teil des Gases im Kreislauf zu führen.

4. Vorrichtung nach einem der Ansprüche 1 bis 3, **dadurch gekennzeichnet, daß** die äußere Kammer (13, 32) und/oder die innere Kammer (12, 33) im Querschnitt im wesentlichen kreisrund sind.

5. Vorrichtung nach einem der Ansprüche 1 bis 4, **dadurch gekennzeichnet, daß** die äußere Kammer (12, 33) und die innere Kammer (13, 32) konzentrisch zueinander angeordnet sind.

6. Vorrichtung nach einem der Ansprüche 1 bis 5, **dadurch gekennzeichnet, daß** im oberen beziehungsweise unteren Bereich der inneren Kammer (12, 33) ein Ventilator (14, 34) zum Erzeugen der Drallströmung angeordnet ist, dessen Saugseite mit der inneren Kammer (12, 33) und dessen Druckseite mit der äußeren Kammer (13, 32) verbunden ist.

7. Vorrichtung nach einem der Ansprüche 1 bis 6, **dadurch gekennzeichnet, daß** der Ventilator (14, 34) als Radiallüfter ausgebildet ist, dessen Lüfterrad koaxial zur inneren und/oder äußeren Kammer angeordnet ist.

8. Vorrichtung nach einem der Ansprüche 1 bis 7, **dadurch gekennzeichnet, daß** in der Gasströmung zwischen der Wandung der inneren und äußeren Kammer Leitbleche (18, 40) vorhanden sind, die die Bildung der Drallströmung unterstützen.

9. Vorrichtung nach einem der Ansprüche 1 bis 8, **dadurch gekennzeichnet, daß** wenigstens eine Heizeinrichtung in der Gasströmung außerhalb der Wirbelschicht vorgesehen ist.

10. Vorrichtung nach Anspruch 2 bis 9, **dadurch gekennzeichnet, daß** die Heizeinrichtung wenigstens einen Brenner (42) mit einem Flammrohr (43, 44) umfaßt, das von oben in die innere Kammer (33) geführt ist.

11. Vorrichtung nach Anspruch 10, **dadurch gekennzeichnet, daß** sich das Flammrohr (44) weit in die innere Kammer hinein erstreckt und wenigstens eine Öffnung (45) aufweist, durch die zumindest ein Teilstrom des zurückströmenden Gases in das Flammrohr zur Nachverbrennung gelangt.

12. Vorrichtung nach einem der Ansprüche 1 bis 8, **dadurch gekennzeichnet, daß** die Heizeinrichtung wenigstens einen Brenner (21) umfaßt, der tangential in die äußere Kammer (13) mündet.

13. Vorrichtung nach einem der Ansprüche 1 bis 8, **dadurch gekennzeichnet, daß** die Heizeinrichtung elektrische Heizelemente umfaßt.

14. Vorrichtung nach einem der Ansprüche 1 bis 12, **dadurch gekennzeichnet, daß** die äußere Kammer (13, 32) wenigstens eine radial außenliegende Öffnung (17, 37) zur Entnahme der abgeschiedenen Feststoffpartikel aufweist.

15. Vorrichtung nach einem der Ansprüche 1 bis 14, **dadurch gekennzeichnet, daß** der Lochboden (11) zur Entnahme des Gutes zumindest teilweise klappbar ist.

16. Vorrichtung nach einem der Ansprüche 2 bis 14, **dadurch gekennzeichnet, daß** eine außenliegende Öffnung (47) an der Seitenwandung der äußeren Kammer (32) in der Höhe des Siebbodens zur Entnahme des Guts vorhanden ist.

17. Vorrichtung nach einem der Ansprüche 1 bis 16, **dadurch gekennzeichnet, daß** die Außenwandung (20, 39) der äußeren Kammer oder die Wandungen (19, 41; 20, 39) beider Kammern zumindest teilweise durchsichtig sind.

## Claims

1. An apparatus for the heat treatment of granular material, in particular for roasting foodstuffs such as coffee beans, in which the material to be treated lies on a perforated plate (11), through which a gas flows from below, and in which the exhaust gas can be fed behind the fluidized bed to a cyclone separator for the separation of discharged solids particles,
**characterised in that** the sieve plate (11) is disposed in an inner chamber (12), which is at least partially surrounded by an outer chamber (13) forming the cyclone separator, into which chamber the exhaust gas from the inner chamber can be introduced from above with a swirling flow (16).

2. An apparatus for the heat treatment of granular material, in particular for roasting foodstuffs such as coffee beans, in which the material to be treated lies on a perforated plate (31), through which a gas flows from below, and in which the exhaust gas can be fed behind the fluidised bed to a cyclone separator for the separation of discharged solids particles,
**characterised in that** the sieve plate (31) is disposed in an outer chamber (32), in which at least the region above the perforated plate is designed as a cyclone separator and which at least partially surrounds an inner chamber (33) through which the gas beneath the perforated plate can be introduced with a swirling flow (36) into the inner chamber.

3. An apparatus according to one of Claims 1 or 2,
**characterised in that** the flow in the lower or the upper region (15, 35) of the inner chamber (12, 33) is connected to the flow in the outer chamber (13, 32) in order to circulate at least a part of the gas.

4. An apparatus according to one of Claims 1 to 3,
**characterised in that** the outer chamber (13, 32) and/or the inner chamber (12, 33) have a substantially round cross section.

5. An apparatus according to one of Claims 1 to 4,
**characterised in** the outer chamber (12, 33) and the inner chamber (13, 32) are disposed concentrically to each other.

6. An apparatus according to one of Claims 1 to 5,
**characterised in that** a fan (14, 34) for producing the swirling flow is disposed in the upper or lower region of the inner chamber (12, 33), the suction side of said fan being connected to the inner chamber (12, 33) and the pressure side of said fan being connected to the outer chamber (13, 32).

7. An apparatus according to one of Claims 1 to 6,
**characterised in that** the fan (14, 34) is designed as a centrifugal fan, the fan rotor of which is disposed coaxially to the inner and/or outer chamber.

8. An apparatus according to one of Claims 1 to 7,
**characterised in that** baffle plates (18, 40) that assist the formation of the swirling flow are provided in the gas flow between the walls of the inner and outer chambers.

9. An apparatus according to one of Claims 1 to 8,
**characterised in that** at least one heating device is provided in the gas flow outside the fluidised bed.

10. An apparatus according to Claims 2 to 9,
**characterised in that** the heating device comprises at least one burner (42) with a flame tube (43, 44) which is passed from above into the inner chamber (33).

11. An apparatus according to Claim 10,
**characterised in that** the flame tube (44) extends deep into the inner chamber and comprises at least one opening (45), through which at least a partial flow of the returning gas travels into the flame tube for afterburning.

12. An apparatus according to one of Claims 1 to 8,
**characterised in that** the heating device comprises at least one burner (21), which opens tangentially into the outer chamber (13).

13. An apparatus according to one of Claims 1 to 8,
**characterised in that** the heating device comprises electric heating elements.

14. An apparatus according to one of Claims 1 to 12,
**characterised in that** the outer chamber (13, 32) comprises at least one radially outer opening (17, 37) for the removal of the separated solids particles.

15. An apparatus according to one of Claims 1 to 14,
**characterised in that** the perforated plate (11) is at least partially hinged for the removal of the material.

16. An apparatus according to one of Claims 2 to 14,
**characterised in that** an external opening (47) is provided at the side wall of the outer chamber (32) at the height of the sieve plate for the removal of the material.

17. An apparatus according to one of Claims 1 to 16,
**characterised in that** the outer wall (20, 39) of the outer chamber or the walls (19, 41; 20, 39) of both chambers are at least in part transparent.

## Revendications

1. Appareil de torréfaction de produits en grains, notamment pour griller des produits alimentaires tels que des grains de café, dans lequel le produit à traiter repose sur un fond perforé (11) traversé par un gaz ascendant et le gaz sortant peut être amené après la couche fluidisée à un cyclone servant de séparateur des particules solides entraînées,
**caractérisé en ce que**
le fond criblant (11) est disposé dans une chambre (12) interne entourée au moins en partie par une chambre (13) externe formant le cyclone séparateur et dans laquelle le gaz sortant de la chambre interne peut être introduit par le haut avec un écoulement giratoire (16).

2. Appareil de torréfaction de produits en grains, notamment pour griller des produits alimentaires tels que des grains de café, dans lequel le produit à traiter repose sur un fond perforé (11) traversé par un gaz ascendant et le gaz sortant peut être amené après la couche fluidisée à un cyclone servant de séparateur des particules solides entraînées,
**caractérisé en ce que**
le fond criblant (31) est disposé dans une chambre (32) externe dans laquelle au moins la zone située au-dessus du fond perforé forme le cyclone séparateur, cette chambre entourant au moins en partie une chambre interne (33) à travers laquelle le gaz situé sous le fond perforé peut être introduit avec un mouvement giratoire (36) dans la chambre externe.

3. Appareil selon la revendication 1 ou 2,
**caractérisé en ce que**
la zone inférieure (15) ou la zone supérieure (35) de la chambre interne (12, 33) respectivement est reliée par un écoulement à la chambre externe (13, 32) respectivement, de manière à recycler au moins une partie des gaz.

4. Appareil selon une des revendications 1 à 3,
**caractérisé en ce que**
la chambre externe (13, 32) et/ou la chambre interne (12, 33) ont une section de forme essentiellement circulaire.

5. Appareil selon une des revendications 1 à 4,
**caractérisé en ce que**
la chambre externe (12, 33) et la chambre interne (13, 32) sont concentriques.

6. Appareil selon une des revendications 1 à 5,
**caractérisé en ce que**
dans la zone supérieure ou dans la zone inférieure de la chambre interne (12, 33), un ventilateur (14, 34) crée l'écoulement giratoire, et son côté aspiration est relié à la chambre interne (12, 33), tandis que son côté refoulement est relié à la chambre externe (13, 32).

7. Appareil selon une des revendications 1 à 6,
**caractérisé en ce que**
le ventilateur (14, 34) est un ventilateur radial dont la zone de ventilation est coaxiale à la chambre interne et/ou à la chambre externe.

8. Appareil selon une des revendications 1 à 7,
**caractérisé en ce que**
dans l'écoulement gazeux, entre les parois de la chambre interne et de la chambre externe des tôles directrices (18, 40) participent à la formation de l'écoulement giratoire.

9. Appareil selon une des revendications 1 à 8,
**caractérisé par**
au moins un dispositif de chauffage dans l'écoulement gazeux, en dehors de la couche fluidisée.

10. Appareil selon les revendications 2 à 9,
**caractérisé en ce que**
le dispositif de chauffage comprend au moins un brûleur (42) avec un tube de flamme (43, 44) qui pénètre d'en haut dans la chambre interne (33).

11. Appareil selon la revendication 10,
**caractérisé en ce que**
le tube de flamme (44) pénètre loin dans la chambre interne et présente au moins une ouverture (45) à travers laquelle un courant partiel de gaz en retour arrive au tube de flamme pour réaliser une postcombustion.

12. Appareil selon une des revendications 1 à 8,
**caractérisé en ce que**
le dispositif de chauffage comprend au moins un brûleur (21) qui débouche tangentiellement dans la chambre externe (13).

13. Appareil selon une des revendications 1 à 8,
**caractérisé en ce que**
le dispositif de chauffage comprend des éléments chauffants électriques.

14. Appareil selon une des revendications 1 à 12,
**caractérisé en ce que**
la chambre externe (13, 32) présente au moins une ouverture (17, 37) située radialement vers l'extérieur et servant à retirer les particules solides séparées.

15. Appareil selon une des revendications 1 à 14,
**caractérisé en ce que**
le fond perforé (11) peut être rabattu au moins en partie pour retirer le produit.

16. Appareil selon une des revendications 2 à 14,
**caractérisé en ce qu'**
une ouverture (47) vers l'extérieur est réalisée dans la paroi latérale de la chambre externe (32), à la hauteur du fond criblant, pour retirer le produit.

17. Appareil selon une des revendications 1 à 16,
**caractérisé en ce que**
la paroi externe (20, 39) de la chambre externe ou les parois (19, 41 ; 20, 39) des deux chambres sont transparentes au moins en partie.
